# EUROPEAN PATENT APPLICATION

(11) **EP 4 782 326 A1**
(43) Date of publication of application: **29.07.2026**
(21) Application number: 25153550.6
(22) Date of filing: 23.01.2025
(51) Int. Cl.: B63H 5/125, B63H 21/17, B63H 23/24, F16C 17/10, F16C 35/00, H02H 5/08, H02K 5/16, H02K 5/173

(54) **POD PROPULSION UNIT**

(71) Applicant: ABB Oy, 00380 Helsinki (FI)
(72) Inventor: PELLINEN, Petri, 00980 Helsinki (FI); PELJO, Veli-Pekka, 00980 Helsinki (FI); SIIPILEHTO, Sakari, 00980 Helsinki (FI)
(74) Representative: Boco IP Oy Ab

(57) **Abstract**

Presented is a pod propulsion unit 1 comprising a housing (2), a support arm (3), a propeller shaft (5) that is rotatable supported within the housing by means of at least a first bearing arrangement (6) having a first bearing housing (7), first fastening means (11) for fastening the first bearing housing (7) to the housing (2). The first bearing housing (7) and the housing (2) are spaced apart from one another by means of a first electrical insulation arrangement (13) arranged between the first bearing housing (7) and the housing (2) and configured to electrically insulate the first bearing housing (7) from the housing (2). The first electrical insulation arrangement (13) comprising first ceramic insulators (42), and the first ceramic insulators (42) contacting the first bearing housing (7) and the housing (2) so as to space apart the first bearing housing (7) and the housing (2) from one another.

## Description

### Field

The invention relates to a pod propulsion unit as defined in the preamble of independent claim 1.

The bearing arrangements rotatable supporting the propeller shaft in the housing of pod propulsion units are normally electrically insulated from the housing of the pod propulsion unit to prevent electric current flow through the bearing arrangements. One known way is to provide an epoxy layer such as epoxy reinforced glass fiber between the bearing housing of the bearing arrangement and a frame means of the housing of the pod propulsion unit to which the bearing housing of the bearing arrangement is attached to so as to space apart and electrically insulate the bearing housing of the bearing arrangement from the frame means of the housing of the pod propulsion unit. To be able to properly electrically insulate the bearing housing of the bearing arrangement from the frame means of the housing of the pod propulsion unit, a thick epoxy layer is required. This leads to increased mechanical risks as the epoxy layer is much softer than steel which both the housing and the bearing housing are usually made of. Epoxy can also absorb moisture and this affects negatively the electrical insulation ability of the epoxy.

### Objective

The object is to provide a pod propulsion unit having electrical insulation arrangement between the bearing housing of the bearing arrangement and the housing of the pod propulsion unit, which electrical insulation arrangement is capable of electrically insulating the bearing housing of the bearing arrangement from the housing of the pod propulsion unit and that is mechanically robust.

### Short description

The pod propulsion unit is characterized by the definitions of independent claim 1. Preferred embodiments of the pod propulsion unit are defined in the dependent claims.

### List of figures

In the following the pod propulsion unit will described in more detail by referring to the figures of which
Figure 1 shows a pod propulsion unit,
Figure 2 is a detail view of a first embodiment of the pod propulsion unit,
Figure 3 is a detail view of a second embodiment of the pod propulsion unit,
Figure 4, section view along A-A in figure 3
Figure 5 is a detail view of a third embodiment of the pod propulsion unit,
Figure 6 is a detail view of a fourth embodiment of the pod propulsion unit,
Figure 7 is a detail view of a fifth embodiment of the pod propulsion unit,
Figure 8 is a detail view of a sixth embodiment of the pod propulsion unit
Figure 9 is a detail view of a seventh embodiment of the pod propulsion unit,
Figure 10 is a detail view of an eight embodiment of the pod propulsion unit,
Figure 11 is a detail view of a ninth embodiment of the pod propulsion unit at D-D in figures 12 and 13,
Figure 12 is a detail view of the ninth embodiment of the pod propulsion unit illustrated in figure 11 at B-B, and
Figure 13 is a detail view of the ninth embodiment of the pod propulsion unit illustrated in figure 11 at C-C.

### Detailed description

Next the pod propulsion unit 1 and some variants and embodiments of the pod propulsion unit 1 will be described in greater detail.

The pod propulsion unit 1 comprises a housing 2.

The pod propulsion unit 1 comprises a support arm 3 attached to the housing 2 and configured to fasten the housing 2 to a hull 4 of a marine vessel.

The pod propulsion unit 1 comprises a propeller shaft 5.

The propeller shaft 5 is rotatable supported within the housing 2 by means of at least a first bearing arrangement 6 having a first bearing housing 7 and by means of at least a second bearing arrangement 9 having a second bearing housing 10.

The pod propulsion unit 1 comprises first fastening means 11 for fastening the first bearing housing 7 to the housing 2.

The first bearing housing 7 and the housing 2 are spaced apart from one another by means of a first electrical insulation arrangement 13 arranged between the first bearing housing 7 and the housing 2 and configured to electrically insulate the first bearing housing 7 from the housing 2.

The pod propulsion unit 1 can comprise second fastening means 40 for fastening the second bearing housing 10 to the housing 2 such as to a second frame means (not illustrated in the figures) of the housing 2. The second bearing housing 10 can alternatively be an integral part of the housing 2.

The pod propulsion unit 1 comprises a propeller 14 attached to the propeller shaft 5.

The first bearing housing 7 have first holes 15 aligned with second holes 16 in the housing 2 to form aligned first holes 15 and second holes 16. Aligned first holes 15 and second holes 16 means here that a first hole 15 need not necessarily to be coaxial or even to be fully aligned with a second hole 16.

The first fastening means 11 comprises first elongated fasteners 17 arranged in aligned first holes 15 and second holes 16.

The first electrical insulation arrangement 13 comprises first ceramic insulators 42.

The first ceramic insulators 42 contact the first bearing housing 7 and contact the housing 2 so as to space apart the first bearing housing 7 and the housing 2 from one another.

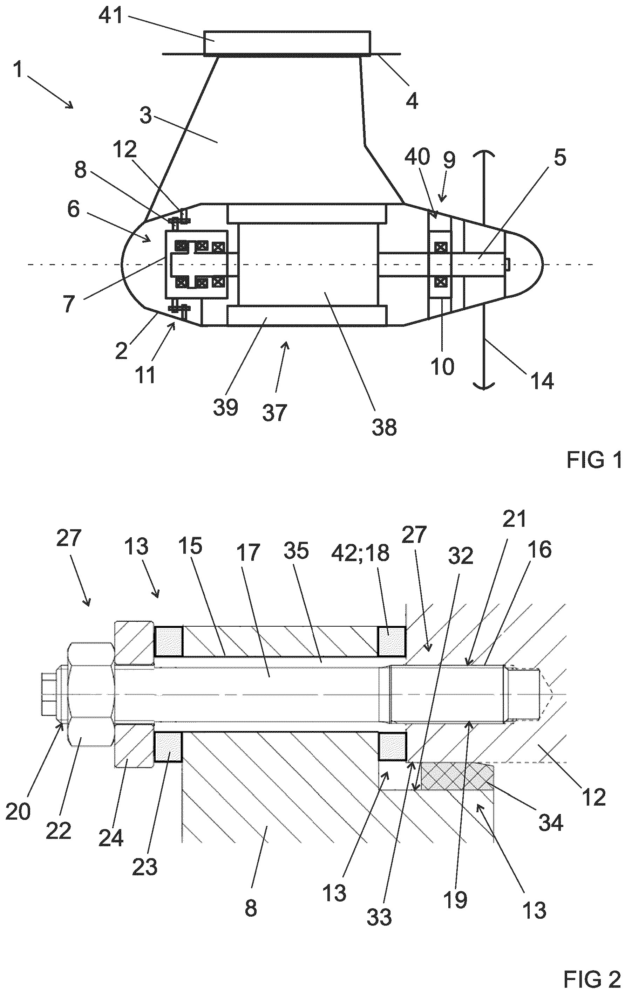

At least some of the first ceramic insulators 42 are preferably, but not necessarily, as in the embodiments illustrated in figures 1 to 10, in the form of first ceramic washers 18 penetrated or passed through by said first elongated fasteners 17 arranged in aligned first holes 15 and second holes 16.

If at least some of the first ceramic insulators 42 are in the form of first ceramic washers 18 penetrated or passed through by said first elongated fasteners 17 arranged in aligned first holes 15 and second holes 16, the cross-section such as the inner diameter of the inner cylindric surface of the first ceramic washers 18 can be larger than the cross-section such as larger than the outer diameter of said first elongated fasteners 17 of the first fastening means 11 at the first ceramic washers 18. This to provide an electrically insulating air gap (not marked with a reference numeral) between the first ceramic washers 18 and the first elongated fasteners 17 at the first ceramic washers 18.

The first bearing housing 7 is preferably, but not necessarily, as in the embodiments of the pod propulsion unit 1 illustrated in the figures, provided with a first flange portion 8, and the first holes 15 are preferably, but not necessarily, provided in the first flange portion 8. The first flange portion 8 can be in the form of a separate part that is fastened to the first bearing housing 7. It is also possible that the first flange portion 8 is in the form of a part that is integrally formed with the first bearing housing 7.

The housing 2 is preferably, but not necessarily, as in the embodiments of the pod propulsion unit 1 illustrated in the figures, provided with a first frame means 12, and the second holes 16 are preferably, but not necessarily, provided in the first frame means 12. The first frame means 12 can be in the form of a separate part that is fastened to the housing 2. It is also possible that the first frame means 12 is in the form of a part that is integrally formed with the housing 2.

If the first bearing housing 7 is provided with a first flange portion 8 in which the first holes 15 are provided and if the housing 2 is provided with a first frame means 12 in which the second holes 16 are provided, the first holes 15 in the first flange portion 8 of the first bearing housing 7 are aligned with the second holes 16 in the first frame means 12 in the housing 2 to provide said aligned first holes 15 and second holes 16. In such case, the first elongated fasteners 17 are arranged in the aligned first holes 15 in the first flange portion 8 of the first bearing housing 7 and in the second holes 16 in the first frame means 12 in the housing 2 and the first ceramic insulators42 contact the first flange portion 8 of the first bearing housing 7 and contact the first frame means 12 of the housing 2 so as to space apart the first flange portion 8 of the first bearing housing 7 and the first frame means 12 of the housing 2 from one another so as to electrically insulate the first flange portion 8 of the first bearing housing 7 from the first frame means 12 of the housing 2.

The first fastening means 11 comprises preferably, but not necessarily, pressing means 27 configured to cooperate with the first elongated fasteners 17 so as to press the first bearing housing 7 and the housing 2 towards each other so that the first ceramic insulators 42 contacting the first bearing housing 7 and contacting the housing 2 are pressed between the first bearing housing 7 and the housing 2. If the first bearing housing 7 is provided with a first flange portion 8 in which the first holes 15 are provided and if the housing 2 is provided with a first frame means 12 in which the second holes 16 are provided, the pressing means 27 is configured to cooperate with the first elongated fasteners 17 so as to press the first flange portion 8 of the first bearing housing 7 and the first frame means 12 of the housing 2 towards each other so that the first ceramic insulators42 contacting the first flange portion 8 of the first bearing housing 7 and contacting the first frame means 12 housing 2 are pressed between the first flange portion 8 of the first bearing housing 7 and the first frame means 12 of the housing 2.

The first ceramic insulators 42 can for example at least partly be made of at least one of aluminum oxide and zirconium oxide.

The number of first elongated fasteners 17 and the number of first ceramic insulators 42, which can be first ceramic washers 18, is preferably, but not necessarily, between 10 and 30.

If the first fastening means 11 comprises pressing means 27, the first electrical insulation arrangement 13 comprising preferably, but not necessarily, as in the embodiments of the pod propulsion unit 1 illustrated in figures, second ceramic washers 23 penetrated or passed through by said first elongated fasteners 17 arranged in aligned first holes 15 and second holes 16, wherein the second ceramic washers 23 contact the first bearing housing 7 and contact the pressing means 27 so as to space apart the first bearing housing 7 and the pressing means 27 from one another and so as to electrically insulate the first bearing housing 7 and the pressing means 27 from one another. If the first bearing housing 7 is provided with a first flange portion 8 in which the first holes 15 are provided, the second ceramic washers 23 contact the first flange portion 8 of the first bearing housing 7 and contact the pressing means 27 so as to space apart the first flange portion 8 of the first bearing housing 7 and the pressing means 27 from one another and so as to electrically insulate the first flange portion 8 of the first bearing housing 7 and the pressing means 27 from one another. The second ceramic washers 23 can for example at least partly be made of at least one of aluminum oxide and zirconium oxide.

The cross-section such as the inner diameter of the inner cylindric surface of the second ceramic washers 23 can be larger than the cross-section such as larger than the outer diameter of said first elongated fasteners 17 of the first fastening means 11 at the second ceramic washers 23. This to provide an electrically insulating air gap (not marked with a reference numeral) between the second ceramic washers 23 and the first elongated fasteners 17 at the second ceramic washers 23.

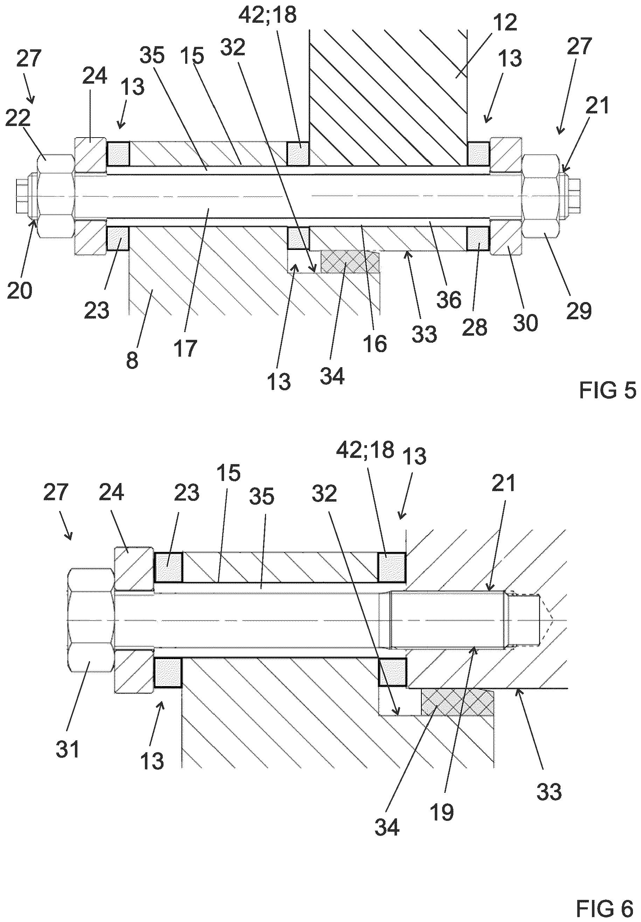

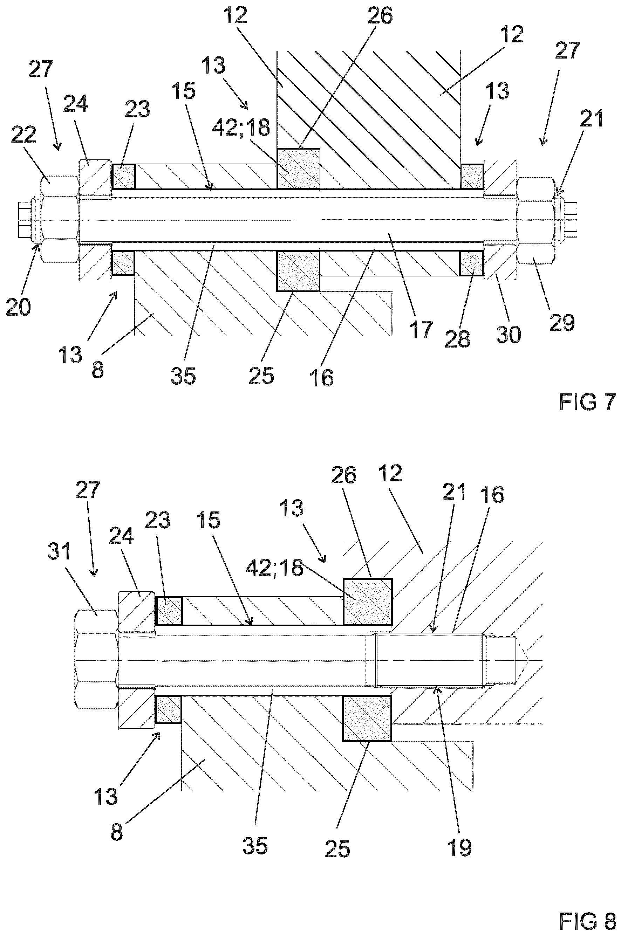

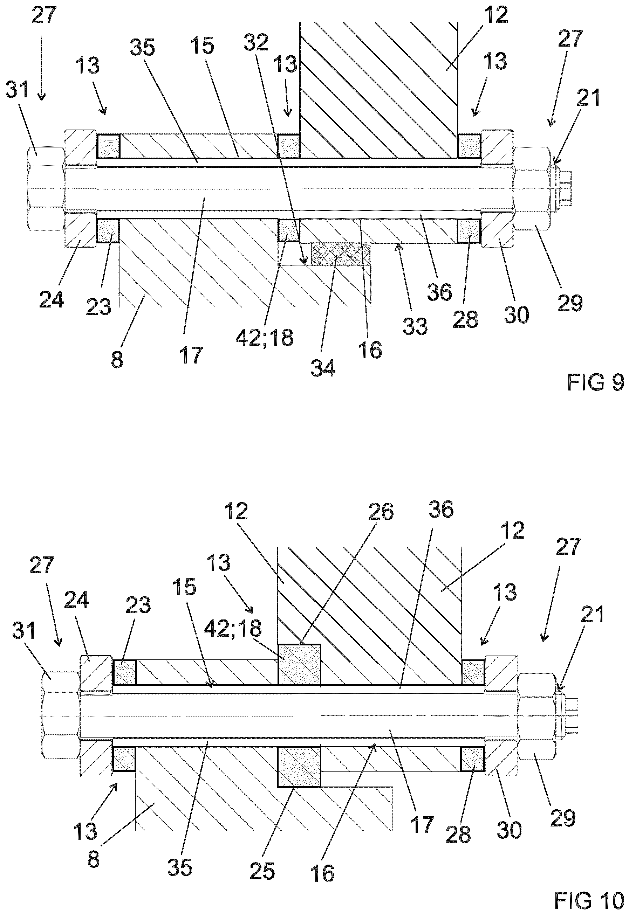

If the first fastening means 11 comprises pressing means 27, the first electrical insulation arrangement 13 comprising preferably, but not necessarily, as in the third embodiment of the pod propulsion unit 1 illustrated in figure 5 , as in the fifth embodiment of the pod propulsion unit 1 illustrated in figure 7, as in the seventh embodiment of the pod propulsion unit 1 illustrated in figure 9, and as in the eighth embodiment of the pod propulsion unit 1 illustrated in figure 10 third ceramic washers 28 penetrated or passed through by said first elongated fasteners 17 arranged in aligned first holes 15 and second holes 16, wherein the third ceramic washers 28 contact the housing 2 and contact the pressing means 27 so as to space apart the housing 2 and the pressing means 27 from one another and so as to electrically insulate the housing 2 and the pressing means 27 from one another. If the housing 2 is provided with a first frame means 12 in which the second holes 16 are provided, the third ceramic washers 28 contact the first frame means 12 of the housing 2 and contact the pressing means 27 so as to space apart the first frame means 12 of the housing 2 and the pressing means 27 from one another and so as to electrically insulate the first frame means 12 of the housing 2 and the pressing means 27 from one another. The third ceramic washers 28 can for example at least partly be made of at least one of aluminum oxide and zirconium oxide.

The cross-section such as the inner diameter of the inner cylindric surface of the third ceramic washers 28 can be larger than the cross-section such as larger than the outer diameter of said first elongated fasteners 17 of the first fastening means 11 at the third ceramic washers 28. This to provide an electrically insulating air gap (not marked with a reference numeral) between the third ceramic washers 28 and the first elongated fasteners 17 at the third ceramic washers 18.

The cross-section such as the outer diameter of the first elongated fasteners 17 is preferably, but not necessarily, as in the embodiments of the propulsion unit 1 illustrated in figures, smaller than the cross-section such as smaller than the inner diameter of the first holes 15 in the first bearing housing 7 at the first holes 15 in the first bearing housing 7 so that the first elongated fasteners 17 and the first bearing housing 7 are spaced apart from one another so as to provide a first electrically insulating air gap 35 between the first elongated fasteners 17 and the first bearing housing 7 at the first holes 15 so as to electrically insulate the first elongated fasteners 17 from the first bearing housing 7. If the first bearing housing 7 is provided with a first flange portion 8 in which the first holes 15 are provided, the cross-section such as the outer diameter of the first elongated fasteners 17 is preferably, but not necessarily, as in the embodiments of the propulsion unit 1 illustrated in figures, smaller than the cross-section such as smaller than the inner diameter of the first holes 15 in the first flange portion 8 of the first bearing housing 7 at the first holes 15 in the first flange portion 8 of the first bearing housing 7 so that the first elongated fasteners 17 and the first flange portion 8 of the first bearing housing 7 being spaced apart from one another so as to provide a first electrically insulating air gap 35 at the first holes 15 between the first elongated fasteners 17 and the first flange portion 8 of the bearing housing 7 so as to electrically insulate the first elongated fasteners 17 from the first flange portion 8 of the first bearing housing 7.

The cross-section such as the outer diameter of the first elongated fasteners 17 can, as in the third embodiment of the propulsion unit 1 illustrated in figure 5, as in the fifth embodiment of the propulsion unit 1 illustrated in figure 7, as in the seventh embodiment of the propulsion unit 1 illustrated in figure 9, and as in the eighth embodiment of the propulsion unit 1 illustrated in figure 10, be smaller than the cross-section such as smaller than the inner diameter of the second holes 16 in the housing 2 at the second holes 16 in the housing 2 so that the first elongated fasteners 17 and the housing 2 are spaced apart from one another so as to provide a second electrically insulating air gap 36 between the first elongated fasteners 17 and the housing 2 at the second holes 16 so as to electrically insulate the first elongated fasteners 17 from the housing 2. If the housing 2 is provided with a first frame means 12 in which the second holes 16 are provided, the cross-section such as the outer diameter of the first elongated fasteners 17 can, as in the third embodiment of the propulsion unit 1 illustrated in figure 5, as in the fifth embodiment of the propulsion unit 1 illustrated in figure 7, as in the seventh embodiment of the propulsion unit 1 illustrated in figure 9, and as in the eighth embodiment of the propulsion unit 1 illustrated in figure 10, be smaller than the cross-section such as smaller than the inner diameter of the second holes 16 in the first frame means 12 of the housing 2 at the second holes 16 in the first frame means 12 of the housing 2 so that the first elongated fasteners 17 and the first frame means 12 of the housing 2 are spaced apart from one another at the second holes 16 so as to provide a second electrically insulating air gap 36 between the first elongated fasteners 17 and the first frame means 12 of the housing 2 so as to electrically insulate the first elongated fasteners 17 from the first frame means 12 of the housing 2.

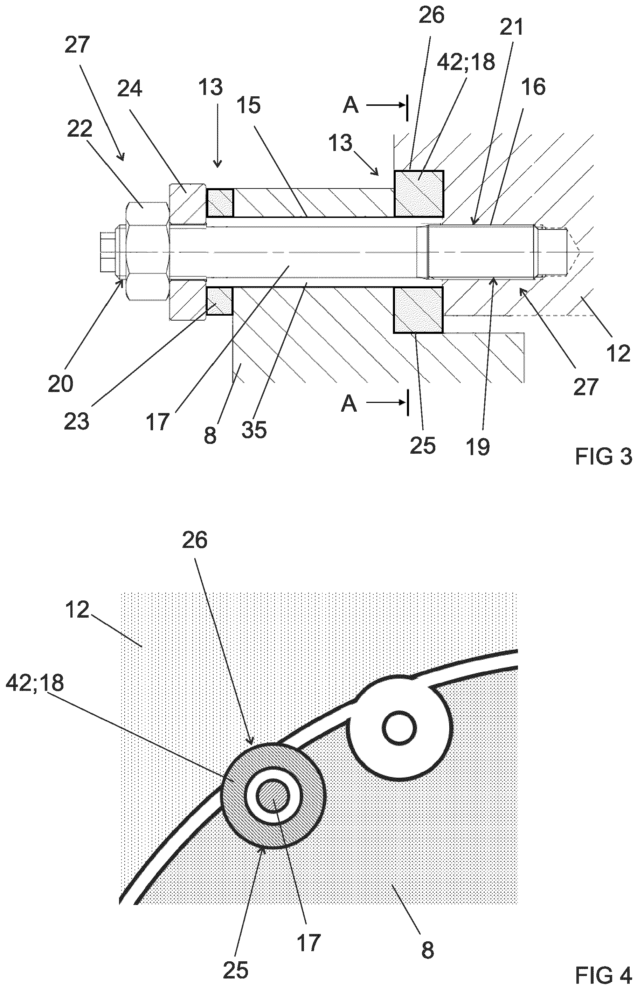

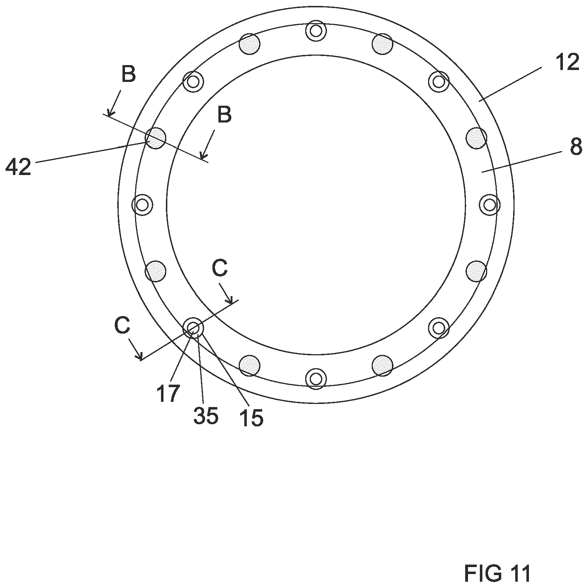

If the first fastening means 11 comprises pressing means 27, the first elongated fasteners 17 comprises preferably, but not necessarily, as in the first embodiment of the pod propulsion unit 1 illustrated in figure 2, as in the second embodiment of the pod propulsion unit 1 illustrated in figure 3, as in the third embodiment of the pod propulsion unit 1 illustrated in figure 5, as in the fifth embodiment of the pod propulsion unit 1 illustrated in figure 7, and as in the ninth embodiment of the pod propulsion unit 1 illustrated in figures 11 to 13 a first outer threaded end section 20 outside the aligned first holes 15 and second holes 16, wherein the pressing means 27 comprises a first nut 22 threadingly engaging the first outer threaded end section 20 and configured to press the first bearing housing 7 and the housing 2 towards each other. If the first bearing housing 7 is provided with a first flange portion 8 in which the first holes 15 are provided and if the housing 2 is provided with a first frame means 12 in which the second holes 16 are provided and if the first fastening means 11 comprises pressing means 27, the first elongated fasteners 17 comprises preferably, but not necessarily, as in the first embodiment of the pod propulsion unit 1 illustrated in figure 2, as in the second embodiment of the pod propulsion unit 1 illustrated in figure 3, as in the third embodiment of the pod propulsion unit 1 illustrated in figure 5, as in the fifth embodiment of the pod propulsion unit 1 illustrated in figure 7, and as in the ninth embodiment of the pod propulsion unit 1 illustrated in figures 11 to 13, a first outer threaded end section 20 outside the aligned first holes 15 and second holes 16, wherein the pressing means 27 comprises a first nut 22 threadingly engaging the first outer threaded end section 20 and configured to press the first flange portion 8 of the first bearing housing 7 and the first frame means 12 of the housing 2 towards each other. If the first fastening means 11 comprises pressing means 27 comprising first nuts 22, as presented, the first electrical insulation arrangement 13 comprising preferably, but not necessarily, as in the embodiments of the pod propulsion unit 1 illustrated in figures, second ceramic washers 23 penetrated or passed through by said first elongated fasteners 17 arranged in aligned first holes 15 and second holes 16, wherein the second ceramic washers 23 contacting the first bearing housing 7 and contacting the first nuts 22 so as to space apart the first bearing housing 7 and the first nuts 22 from one another so as to electrically insulate the first bearing housing 7 and the first nuts 22 from one another. If the first bearing housing 7 is provided with a first flange portion 8 in which the first holes 15 are provided and if the housing 2 is provided with a first frame means 12 in which the second holes 16 are provided and if the first fastening means 11 comprises pressing means 27 and if the first fastening means 11 comprises pressing means 27 comprising first nuts 22, as presented, the first electrical insulation arrangement 13 comprising preferably, but not necessarily, as in the embodiments of the pod propulsion unit 1 illustrated in figures, second ceramic washers 23 penetrated or passed through by said first elongated fasteners 17 arranged in aligned first holes 15 and second holes 16, wherein the second ceramic washers 23 contacting the first flange portion 8 of the first bearing housing 7 and contacting the first nuts 22 so as to space apart the first flange portion 8 of the first bearing housing 7 and the first nuts 22 from one another so as to electrically insulate the first flange portion 8 of the first bearing housing 7 and the first nuts 22 from one another. A first metal washer 24 can be provided at the first elongated fasteners 17 between the first nut 22 and the second ceramic washers 23 as in the first embodiment of the pod propulsion unit 1 illustrated in figure 2, as in the second embodiment of the pod propulsion unit 1 illustrated in figure 3, as in the third embodiment of the pod propulsion unit 1 illustrated in figure 5, as in the fifth embodiment of the pod propulsion unit 1 illustrated in figure 7, and as in the ninth embodiment of the pod propulsion unit 1 illustrated in figures 11 to 13. Spring washers (not illustrated) such as at least one Belleville washer can also be provided at the first elongated fasteners 17 between the first nut 22 and the second ceramic washers 23 to compensate for creeping.

If the first fastening means 11 comprises pressing means 27, the first elongated fasteners 17 comprises preferably, but not necessarily, as in the third embodiment of the pod propulsion unit 1 illustrated in figure 5 and as in the fifth embodiment of the pod propulsion unit 1 illustrated in figure 7, a first outer threaded end section 20 outside the aligned first holes 15 and second holes 16 and a second outer threaded end section 21 outside the aligned first holes 15 and second holes 16, wherein the pressing means 27 configured to press the first bearing housing 7 and the housing 2 towards each other comprises a first nut 22 threadingly engaging the first outer threaded end section 20 and a second nut 29 threadingly engaging the second outer threaded end section 21. If the first bearing housing 7 is provided with a first flange portion 8 in which the first holes 15 are provided and if the housing 2 is provided with a first frame means 12 in which the second holes 16 are provided and if the first fastening means 11 comprises pressing means 27, the first elongated fasteners 17 comprises preferably, but not necessarily, as in the third embodiment of the pod propulsion unit 1 illustrated in figure 5 and as in the fifth embodiment of the pod propulsion unit 1 illustrated in figure 7, a first outer threaded end section 20 outside the aligned first holes 15 and second holes 16 and a second outer threaded end section 21 outside the aligned first holes 15 and second holes 16, wherein the pressing means 27 configured to press the first flange portion 8 of the first bearing housing 7 and the first frame means 12 of the housing 2 towards each other comprises a first nut 22 threadingly engaging the first outer threaded end section 20 and a second nut 29 threadingly engaging the second outer threaded end section 21. If the first fastening means 11 comprises pressing means 27 comprising first nuts 22 and second nuts 29, as presented, the first electrical insulation arrangement 13 comprising preferably, but not necessarily, as in the third embodiment of the pod propulsion unit 1 illustrated in figure 5 and as in the fifth embodiment of the pod propulsion unit 1 illustrated in figure 7, second ceramic washers 23 penetrated or passed through by said first elongated fasteners 17 arranged in aligned first holes 15 and second holes 16, wherein the second ceramic washers 23 contacting the first bearing housing 7 and contacting the first nuts 22 so as to space apart the first bearing housing 7 and the first nuts 22 from one another and so as to electrically insulate the first bearing housing 7 and the first nuts 22 from one another and third ceramic washers 28 penetrated or passed through by said first elongated fasteners 17 arranged in aligned first holes 15 and second holes 16, and wherein the third ceramic washers 28 contacting the housing 2 and contacting the second nuts 29 so as to space apart the housing 2 and the second nuts 29 from one another and so as to electrically insulate the housing 2 and the second nuts 29 from one another. If the first bearing housing 7 provided with a first flange portion 8 in which the first holes 15 are provided and if the housing 2 is provided with a first frame means 12 in which the second holes 16 are provided and if the first fastening means 11 comprises pressing means 27 comprising first nuts 22 and second nuts 29, as presented, the first electrical insulation arrangement 13 comprising preferably, but not necessarily, as in the third embodiment of the pod propulsion unit 1 illustrated in figure 5 and as in the fifth embodiment of the pod propulsion unit 1 illustrated in figure 7, second ceramic washers 23 penetrated or passed through by said first elongated fasteners 17 arranged in aligned first holes 15 and second holes 16, wherein the second ceramic washers 23 contacting the first bearing housing 7 and contacting the first nuts 22 so as to space apart the first bearing housing 7 and the first nuts 22 from one another and so as to electrically insulate the first bearing housing 7 and the first nuts 22 from one another and third ceramic washers 28 penetrated or passed through by said first elongated fasteners 17 arranged in aligned first holes 15 and second holes 16, and wherein the third ceramic washers 28 contacting the housing 2 and contacting the second nuts 29 so as to space apart the housing 2 and the second nuts 29 from one another and so as to electrically insulate the housing 2 and the second nuts 29 from one another. A first metal washer 24 can, as in the third embodiment of the pod propulsion unit 1 illustrated in figure 5, and as in the fourth embodiment of the pod propulsion unit 1 illustrated in figure 7, be provided at the first elongated fasteners 17 between the first nut 22 and the second ceramic washers 23, and a second metal washer 30 can be provided at the first elongated fasteners 17 between the second nut 29 and the third ceramic washers 28. Spring washers (not illustrated) such as a least one Belleville washer can also be provided at the first elongated fasteners 17 between the first nut 22 and the second ceramic washers 23 and be provided at the first elongated fasteners 17 between the t nut 29 and the third ceramic washers 28 to compensate for creeping.

If the first fastening means 11 comprises pressing means 27, the pressing means 27 can, as in the first embodiment of the pod propulsion unit 1 illustrated in figure 2, as in the second embodiment of the pod propulsion unit 1 illustrated in figure 3, as in the fourth embodiment of the pod propulsion unit 1 illustrated in figure 6, as in the sixth embodiment of the pod propulsion unit 1 illustrated in figure 8, and as in the ninth embodiment of the pod propulsion unit 1 illustrated in figures 11 to 13, comprise an inner threading 19 in the second holes 16 in the housing 2, wherein the inner threading 19 in the second holes 16 in the housing 2 being configured to threadingly engage a second outer threaded end section 21 of the first elongated fasteners 17 outside the aligned first holes 15 and second holes 16 so as to anchor the first elongated fasteners 17 in the second holes 16 in the housing 2. If the housing 2 is provided with a first frame means 12 in which the second holes 16 are provided and if the first fastening means 11 comprises pressing means 27, the pressing means 27 can, as in the first embodiment of the pod propulsion unit 1 illustrated in figure 2, as in the second embodiment of the pod propulsion unit 1 illustrated in figure 3, as in the fourth embodiment of the pod propulsion unit 1 illustrated in figure 6, as in the sixth embodiment of the pod propulsion unit 1 illustrated in figure 8, and as in the ninth embodiment of the pod propulsion unit 1 illustrated in figures 11 to 13, comprise an inner threading 19 in the second holes 16 in the first frame means 12 of the housing 2, wherein the inner threading 19 in the second holes 16 in the first frame means 12 of the housing 2 being configured to threadingly engage a second outer threaded end section 21 of the first elongated fasteners 17 outside the aligned first holes 15 and second holes 16 so as to anchor the first elongated fasteners 17 in the second holes 16 in the first frame means 12 of the housing 2.

If the first fastening means 11 comprises pressing means 27, the pressing means 27 can as 6 in the fourth embodiment of the pod propulsion unit 1 illustrated in figure 6, as in the sixth embodiment of the pod propulsion unit 1 illustrated in figure 8, as in the seventh embodiment of the pod propulsion unit 1 illustrated in figure 9, and as in the eighth embodiment of the pod propulsion unit 1 illustrated in figure 10, comprise a head 31 integrally provided at the first elongated fasteners 17, wherein the head 31 being configured to press the first bearing housing 7 and the housing 2 towards each other. In practice this means that the first elongated fasteners 17 can be headed bolts. If the first bearing housing 7 is provided with a first flange portion 8 in which the first holes 15 are provided and if the housing 2 is provided with a first frame means 12 in which the second holes 16 are provided and if the first fastening means 11 comprises pressing means 27, the pressing means 27 can as in the fourth embodiment of the pod propulsion unit 1 illustrated in figure 6, as in the sixth embodiment of the pod propulsion unit 1 illustrated in figure 8, as in the seventh embodiment of the pod propulsion unit 1 illustrated in figure 9, and as in the eighth embodiment of the pod propulsion unit 1 illustrated in figure 10, comprise a head 31 integrally provided at the first elongated fasteners 17, wherein the head 31 being configured to press the first flange portion 8 of the first bearing housing 7 and the first frame means 12 of the housing 2 towards each other. If the first fastening means 11 comprises pressing means 27 comprising heads 31 integrally provided at the first elongated fasteners 17, as presented, the first electrical insulation arrangement 13 comprising preferably, but not necessarily, as in the fourth embodiment of the pod propulsion unit 1 illustrated in figure 6, as in the sixth embodiment of the pod propulsion unit 1 illustrated in figure 8, as in the seventh embodiment of the pod propulsion unit 1 illustrated in figure 9, and as in the eighth embodiment of the pod propulsion unit 1 illustrated in figure 10, second ceramic washers 23 penetrated or passed through by said first elongated fasteners 17 arranged in aligned first holes 15 and second holes 16, wherein the second ceramic washers 23 contacting the first bearing housing 7 and contacting the heads 31 so as to space apart the first bearing housing 7 and the heads 31 from one another and so as to electrically insulate the first bearing housing 7 and the heads 31 from one another. If the first bearing housing 7 is provided with a first flange portion 8 in which the first holes 15 are provided and if the housing 2 is provided with a first frame means 12 in which the second holes 16 are provided and if the first fastening means 11 comprises pressing means 27 and if the first fastening means 11 comprises pressing means 27 comprising heads 31 integrally provided at the first elongated fasteners 17, as presented, the first electrical insulation arrangement 13 comprising preferably, but not necessarily, as in the fourth embodiment of the pod propulsion unit 1 illustrated in figure 6, as in the sixth embodiment of the pod propulsion unit 1 illustrated in figure 8, as in the seventh embodiment of the pod propulsion unit 1 illustrated in figure 9, and as in the eighth embodiment of the pod propulsion unit 1 illustrated in figure 10, second ceramic washers 23 penetrated or passed through by said first elongated fasteners 17 arranged in aligned first holes 15 and second holes 16, wherein the second ceramic washers 23 contacting the first flange portion 8 of the first bearing housing 7 and contacting the heads 31 so as to space apart the first flange portion 8 of the first bearing housing 7 and the heads 31 from one another and so as to electrically insulate the first flange portion 8 of the first bearing housing 7 and the heads 31 from one another. A first metal washer 24 can, as in the fourth embodiment of the pod propulsion unit 1 illustrated in figure 6 , as in the sixth embodiment of the pod propulsion unit 1 illustrated in figure 8, as in the seventh embodiment of the pod propulsion unit 1 illustrated in figure 9, and as in the eighth embodiment of the pod propulsion unit 1 illustrated in figure 10, be provided at the first elongated fasteners 17 between the head 31 and the first ceramic washers 23.

The first holes 15 in the first bearing housing 7 are preferably, but not necessarily, as in the second embodiment of the pod propulsion unit 1 illustrated in figure 3, as in the fifth embodiment of the pod propulsion unit 1 illustrated in figure 7, as in the sixth embodiment of the pod propulsion unit 1 illustrated in figure 8, and as in the eighth embodiment of the pod propulsion unit 1 illustrated in figure 10, provided with a first depression 25 that at least partly surround the first hole 15, and the second holes 16 in the housing 2 are preferably, but not necessarily, provided with a second depression 26 that at least partly surround the second hole 16, wherein first ceramic insulators 42 in the form of first ceramic washers 18 contacting the first bearing housing 7 and contacting the housing 2 being arranged partly in the first depression 25 and being arranged partly in the second depression 26. An advantage of this is that this allows the first ceramic insulators 42 in the form of first ceramic washers 18 to transfer shear forces between the first bearing housing 7 and the housing 2. If the first bearing housing 7 is provided with a first flange portion 8 in which the first holes 15 are provided and if the housing 2 is provided with a first frame means 12 in which the second holes 16 are provided, the first holes 15 in the first flange portion 8 of the first bearing housing 7 are preferably, but not necessarily, as in the second embodiment of the pod propulsion unit 1 illustrated in figure 3, as in the fifth embodiment of the pod propulsion unit 1 illustrated in figure 7, as in the sixth embodiment of the pod propulsion unit 1 illustrated in figure 8, and as in the eighth embodiment of the pod propulsion unit 1 illustrated in figure 10, provided with a first depression 25 that at least partly surround the first hole 15, and the second holes 16 in the first frame means 12 of the housing 2 are preferably, but not necessarily, provided with a second depression 26 that at least partly surround the second hole 16, wherein the first ceramic insulators 42 in the form of first ceramic washers 18 contacting the first flange portion 8 of the first bearing housing 7 and contacting the first frame means 12 of the housing 2 being arranged partly in the first depression 25 and being arranged partly in the second depression 26. The shape and the dimensions of the first ceramic insulators 42 in the form of first ceramic washers 18 corresponds preferably, but not necessarily, at least partly to the shape and the dimensions of the first depressions 25, and the shape and the dimensions of the first ceramic insulators 42 in the form of first ceramic washers 18 corresponds preferably, but not necessarily, at least partly to the shape and the dimensions of the second depressions 26. It is for example possible that the first ceramic insulators 42 in the form of first ceramic washers 18 are ring shaped so that the first ceramic insulators 42 in the form of first ceramic washers 18 have an outer cylindric surface and an inner cylindric surface and it is for example possible that the first depression 25 have a cylindric shape or the shape of a part of a cylinder that the second depression 26 have a cylindric shape or the shape of a part of a cylinder so that the first depressions 25 are configured to hold the first ceramic insulators 42 in the form of first ceramic washers 18 with clearance fit, transition fit or interference fit, and so that the second depressions 26 are configured to hold the first ceramic insulators 42 in the form of first ceramic washers 18 with clearance fit, transition fit or interference fit. In such case, the inner diameter of the inner cylindric surface of the first ceramic insulators 42 in the form of first ceramic washers 18 is preferably, but not necessarily, larger than the outer diameter of said first elongated fasteners 17 of the first fastening means 11 at the first ceramic insulators 42 in the form of first ceramic washers 18.

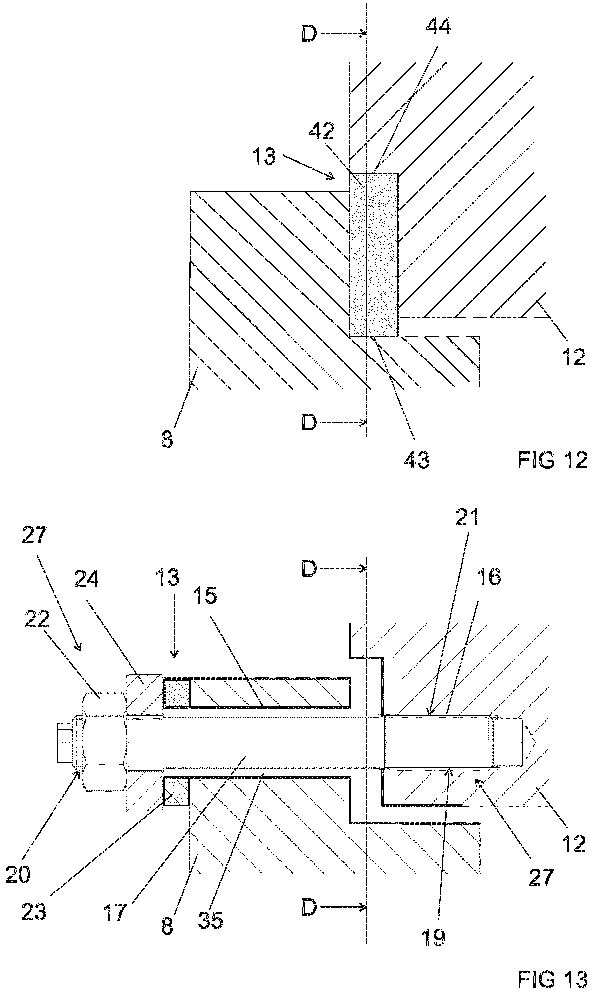

The first bearing housing 7 can be provided with third depressions 43 and the housing 2 can be provided with fourth depressions 44, wherein at least some of the first ceramic insulators 42 contacting the first bearing housing 7 and contacting the housing 2 are arranged partly in a third depression 43 and are arranged partly in the fourth depression 44. A detail view of a such embodiment of the pod propulsion is illustrated in figures 11 to 13 as the ninth embodiment of the propulsion unit. In figures 11 to 13, the first bearing housing 7 is provided with a first flange portion 8 and the third depressions 43 are provided in the first flange portion 8. In figures 11 to 13, the housing 2 is provided with a first frame means 12 and the fourth depressions 44 are provided in the first frame means 12. An advantage of providing such third depressions 43 and fourth depressions 44 is that this allows the first ceramic insulators 42 to transfer shear forces between the first bearing housing 7 and the housing 2. It is possible that at least some of the first ceramic insulators 42 contacting the first bearing housing 7 and contacting the housing 2 have a cylindrical form so that said at least some of the first ceramic insulators 42 being arranged partly in a third depression 43 in the first bearing housing 7, which third depression 43 have a cylindric shape or the shape of a part of a cylinder so that said third depressions 43 is configured to hold the first ceramic insulator 42 with clearance fit, transition fit or interference fit in said third depressions 43and so that said at least some of the first ceramic insulators 42 being arranged partly in a fourth depression 44 in the housing 2, which fourth depression 44 have a cylindric shape or the shape of a part of a cylinder so that said fourth depression 44 is configured to hold the first ceramic insulator 42 with clearance fit, transition fit or interference fit in said fourth depression 44. It is possible to provide the other embodiments of the propulsion unit with first ceramic insulators 42 partly arranged in first depressions 43 in the first bearing housing 7 and fourth depressions 44 in the housing 2 as illustrated in figure 12. The first bearing housing 7 can, as in the first embodiment of the pod propulsion unit 1 illustrated in figure 2, in the third embodiment of the pod propulsion unit 1 illustrated in figure 5, in the fourth embodiment of the pod propulsion unit 1 illustrated in figure 6, and in the eighth embodiment of the pod propulsion unit 1 illustrated in figure 10, comprise an outer circumferential surface portion 32 and the housing 2 can comprising an inner circumferential surface portion 33 that is surrounded by the inner circumferential surface portion 32 of the housing 2, wherein electrically insulating material 34 that is in contact with the outer circumferential surface portion 32 of the first bearing housing 7 and in contact with the inner circumferential surface portion 33 of the housing 2 is provided between the outer circumferential surface portion 32 of the first bearing housing 7 and the inner circumferential surface portion 33 of the housing 2 so as to transfer forces between the first bearing housing 7 and the housing 2. The electrically insulating material 34 can for example comprise epoxy reinforced glass fiber. It is also possible that electrically insulating material 34 comprise ceramic material. The electrically insulating material 34 can be in one-piece form or be formed by a plurality of pieces of electrically insulating material 34.

If the first bearing housing 7 is provided with third depressions 43 and if the housing 2 is provided with fourth depressions 44, so that at least some of the first ceramic insulators 42 contacting the first bearing housing 7 and contacting the housing 2 are arranged partly in a third depression 43 and are arranged partly in the fourth depression 44, the first fastening means 11 for fastening the bearing housing 7 to the pod housing 2 comprise, as in the embodiments of the pod propulsion unit illustrated in the figures, first elongated fasteners 17 arranged in aligned first holes 15 and second holes 16. Pressing means 27 configured to cooperate with the first elongated fasteners 17 so as to press the first bearing housing 7 and the housing 2 towards each other so that the first ceramic washers insulators 42 contacting the first bearing housing 7 and contacting the housing 2 are pressed between the first bearing housing 7 and the housing 2 are preferably, but not necessarily provided.

If the first bearing housing 7 is provided with third depressions 43 in a first flange portion 8 of the first bearing housing 7 and if the housing 2 is provided with fourth depressions 44 in a first frame means 12 of the housing 2, so that at least some of the first ceramic insulators 42 contacting the first flange portion 8 of the first bearing housing 7 and contacting the first frame means 12 of the housing 2 are arranged partly in a third depression 43 in the first flange portion 8 of the first bearing housing 7 and are arranged partly in the fourth depression 44 in the first frame means 12 of the housing 2, the first fastening means 11 for fastening the first flange portion 8 of the bearing housing 7 to the first frame means 12 of the pod housing 2 comprise, as in the embodiments of the pod propulsion unit illustrated in the figures, first elongated fasteners 17 arranged in aligned first holes 15 and second holes 16. Pressing means 27 configured to cooperate with the first elongated fasteners 17 so as to press the first flange portion 8 of the first bearing housing 7 and the first frame means 12 of the housing 2 towards each other so that the first ceramic washers insulators 42 contacting the first flange portion 8 of the first bearing housing 7 and contacting the first frame means 12 of the housing 2 are pressed between the first flange portion 8 of the first bearing housing 7 and the first frame means 12 of the housing 2 are preferably, but not necessarily provided, as illustrated in figure 13.

If the first bearing housing 7 is provided with third depressions 43 and if the housing 2 is provided with fourth depressions 44, so that at least some of the first ceramic insulators 42 contacting the first bearing housing 7 and contacting the housing 2 are arranged partly in a third depression 43 and are arranged partly in the fourth depression 44, the pod propulsion unit can additionally comprise first ceramic insulators 42, which are in the form of first ceramic washers 18, which are penetrated or passed through by the first elongated fasteners 17, which contact the bearing housing 7, and which contact the pod housing 2.

If the first bearing housing 7 is provided with third depressions 43 in a first flange portion 8 of the first bearing housing 7and if the housing 2 is provided with fourth depressions 44 in a first frame means 12 of the housing 2, so that at least some of the first ceramic insulators 42 contacting the first flange portion 8 of the first bearing housing 7 and contacting the first frame means 12 of the housing 2 are arranged partly in a third depression 43 in the first flange portion 8 of the first bearing housing 7 and are arranged partly in the fourth depression 44 in the first frame means 12 of the housing 2, the pod propulsion unit can additionally comprise first ceramic insulators 42, which are in the form of first ceramic washers 18, which are penetrated or passed through by the first elongated fasteners 17, which contact the first flange portion 8 of the bearing housing 7, and which contact the first frame means 12 of the pod housing 2, as in the embodiments of the pod propulsion unit illustrated in the figures 2 to 10.

The first bearing arrangement 6 is preferably, but not necessarily, provided at a so-called non-drive-end (NDE) of the pod propulsion unit 1 and the first bearing arrangement 6 can for example comprise a slide pad trust bearing (not illustrated in the figures) and an axially free roller support bearing (not illustrated in the figures) in the first bearing housing 7 of the first bearing arrangement 6.

The second bearing arrangement 9 is preferably, but not necessarily, provided at a so-called drive end (DE) of the pod propulsion unit 1 and the second bearing arrangement 9 can for example comprise an axially free roller support bearing (not illustrated in the figures) in a second bearing housing 10 of the second bearing arrangement 9. The second bearing housing 10 of the second bearing arrangement 9 comprises preferably, but not necessarily, second fastening means (not illustrated in the figures) for fastening the second bearing housing 10 of the second bearing arrangement 9 to the housing 2 of the pod propulsion arrangement 1. Grounding brushes (not illustrated in the figures) can be provided at the second bearing arrangement 9 electrically in contact with the propeller shaft 5 and in contact with the housing 2 to ground the propeller shaft 5 and to the housing 2.

The pod propulsion unit 1 comprises preferably, but not necessarily, as illustrated in figure 1, an electric motor 37 in the housing between the first bearing arrangement 6 and the second bearing arrangement 9 so that the rotor 38 and the stator 39 of the electric motor 37 coaxially surrounds the propeller shaft 5.

The support arm 3 comprises preferably, but not necessarily, as illustrated in figure 1, a turning arrangement 41 by means of which the pod propulsion unit 1 is connectable to the hull 4 of the marine vessel so that the pod propulsion unit 1 can be turned with respect to the hull 4 of the marine vessel.

It is apparent to a person skilled in the art that as technology advanced, the basic idea of the invention can be implemented in various ways. The invention and its embodiments are therefore not restricted to the above examples, but they may vary within the scope of the claims.

## Claims

1. A pod propulsion unit (1) comprising
a housing (2),
a support arm (3) attached to the housing (2) and configured to fasten the housing (2) to a hull (4) of a marine vessel,
a propeller shaft (5) that is rotatable supported within the housing by means of at least a first bearing arrangement (6) having a first bearing housing (7) and by means of at least a second bearing arrangement (9) having a second bearing (10) housing,
first fastening means (11) for fastening the first bearing housing (7) to the housing (2), wherein the first bearing housing (7) and the housing (2) are spaced apart from one another by means of a first electrical insulation arrangement (13) arranged between the first bearing housing (7) and the housing (2) and configured to electrically insulate the first bearing housing (7) from the housing (2), and
a propeller (14) attached to the propeller shaft (5),
**characterized**
**by** the first bearing housing (7) having first holes (15) aligned with second holes (16) of the housing (2) to form aligned first holes (15) and second holes (16),
by the first fastening means (11) comprising first elongated fasteners (17) arranged in aligned first holes (15) and second holes (16),
by the first electrical insulation arrangement (13) comprising first ceramic insulators (42), and
by the first ceramic insulators (42) contacting the first bearing housing (7) and contacting the housing (2) so as to space apart the first bearing housing (7) and the housing (2) from one another.

2. The pod propulsion unit (1) according to claim 1, **characterized**
**by** the first fastening means (11) comprising pressing means (27) configured to cooperate with the first elongated fasteners (17) so as to press the first bearing housing (7) and the housing (2) towards each other so that the first ceramic insulators (42) contacting the first bearing housing (7) and contacting the housing (2) are pressed between the first bearing housing (7) and the housing (2).

3. The pod propulsion unit (1) according to claim 2, **characterized**
**by** the first elongated fasteners (17) comprises a first outer threaded end section (20) and the pressing means (27) comprises a first nut (22) threadingly engaging the first outer threaded end section (20).

4. The pod propulsion unit (1) according to claim 3, **characterized**
**by** the first elongated fasteners (17) comprises a second outer threaded end section (21) and the pressing means (27) comprises a second nut (29) threadingly engaging the second outer threaded end section (21).

5. The pod propulsion unit (1) according to claim 2 or 3, **characterized**
**by** the pressing means (27) comprising an inner threading (19) in the second holes (16) in the housing (2) and configured to threadingly engage a second outer threaded end section (21) of the first elongated fasteners (17) so as to anchor the first elongated fasteners (17) in the second holes (16) in the housing (2).

6. The pod propulsion unit (1) according to any of the claims 2 to 5, **characterized**
**by** the pressing means (27) comprising a head (31) integrally provided at the first elongated fasteners (17).

7. The pod propulsion unit (1) according to any of the claims 2 to 6, **characterized**
**by** the first electrical insulation arrangement (13) comprising second ceramic washers (23) penetrated by said first elongated fasteners arranged (17) in aligned first holes (15) and second holes (16), and
by the second ceramic washers (23) contacting the first bearing housing (7) and contacting the pressing means (27) so as to space apart the first bearing housing (7) and the pressing means (27) from one another.

8. The pod propulsion unit (1) according to any of the claims 2 to 7, **characterized**
**by** the first electrical insulation arrangement (13) comprising third ceramic washers (28) penetrated by said first elongated fasteners (17) arranged in aligned first holes (15) and second holes (16), and
by the third ceramic washers (28) contacting the housing (2) and contacting the pressing means (27) so as to space apart the housing (2) and the pressing means (27) from one another.

9. The pod propulsion unit (1) according to any of the claims 1 to 8, **characterized**
**by** at least some of the first ceramic insulators (42) being in the form of first ceramic washers (18) penetrated by said first elongated fasteners arranged (17) in aligned first holes (15) and second holes (16).

10. The pod propulsion unit (1) according to claim 9, **characterized**
**by** the first holes (15) in the first bearing housing (7) being provided with a first depression (25) that at least partly surround the first hole (15),
by the second holes (16) in the housing (2) being provided with a second depression (26) that at least partly surround the second hole (16), and
by the first ceramic washers (18) contacting the first bearing housing (7) and contacting the housing (2) being arranged partly in the first depression (25) and being arranged partly in the second depression (26).

11. The pod propulsion unit (1) according to claim 10, **characterized**
**by** the shape and the dimensions of the first ceramic washers (18) corresponding at least partly to the shape and the dimensions of the first depressions (25), and
by the shape and the dimensions of the first ceramic washers (18) corresponding at least partly to the shape and the dimensions of the second depressions (26).

12. The pod propulsion unit (1) according to claim 10 or 11, **characterized**
**by** the first ceramic washers (18) being ring shaped so that the first ceramic washers (18) have an outer cylindric surface and an inner cylindric surface,
by the first depression (25) having a cylindric shape or the shape of a part of a cylinder,
by the second depression (26) having a cylindric shape or the shape of a part of a cylinder,
by the first depressions (25) are configured to hold the first ceramic washers (18) with clearance fit, transition fit or interference fit, and
by the second depressions (26) are configured to hold the first ceramic washers (18) with clearance fit, transition fit or interference fit.

13. The pod propulsion unit (1) according to any of the claims 1 to 12, **characterized**
**by** the first ceramic insulators (40) being made of least partly be made of at least one of aluminum oxide or zirconium oxide.

14. The pod propulsion unit (1) according to any of the claims 1 to 13, **characterized**
**by** the first bearing housing (7) comprising an outer circumferential surface portion (32),
by the housing (2) comprising an inner circumferential surface portion (33),
by the outer circumferential surface portion of the first bearing housing (7) being surrounded by the inner circumferential surface portion of the housing (2), and
by electrically insulating material (34) being provided between the outer circumferential surface portion (32) of the first bearing housing (7) and the inner circumferential surface portion (33) of the housing (2).

15. The pod propulsion unit (1) according to any of the claims 1 to 14, **characterized**
**by** the cross-section such as the diameter of the first elongated fasteners (17) is smaller than the cross-section such as smaller than the diameter of the first holes (15) the first bearing housing (7) at the first holes (15) in the first bearing housing (7) so that the first elongated fasteners (17) and the first bearing housing (7) being spaced apart from one another so as to provide a first electrically insulating air gap (35) between the first elongated fasteners (17) and the first bearing housing (7) so as to electrically insulate the first elongated fasteners (17) from the first bearing housing (7).

16. The pod propulsion unit (1) according to any of the claims 1 to 15, **characterized**
**by** the cross-section such as the diameter of the first elongated fasteners (17) is smaller than the cross-section such as smaller than the diameter of the second holes (16) in the housing (2) at the second holes (16) in the housing (2) so that the first elongated fasteners (17) and the housing (2) being spaced apart from one another so as to provide a second electrically insulating air gap (36) between the first elongated fasteners (17) and the housing (2) so as to electrically insulate the first elongated fasteners (17) from the housing (2).

17. The pod propulsion unit (1) according to any of the claims 1 to 16, **characterized**
**by** the first bearing housing (7) being provided with a first flange portion (8), and
by the first holes (15) being provided in the first flange portion (8).

18. The pod propulsion unit (1) according to any of the claims 1 to 17, **characterized**
**by** the housing (2) being provided with a first frame means (12), and
by the second holes (16) being provided in the first frame means (12).

19. The pod propulsion unit (1) according to any of the claims 1 to 18, **characterized**
**by** the first bearing housing (7) being provided with third depressions (43),
by the housing (2) being provided with fourth depressions (44)
by at least some of the first ceramic insulators (42) contacting the first bearing housing (7) and contacting the housing (2) being arranged partly in one third depression (43) and being arranged partly in one fourth depression (44).
